# EUROPEAN PATENT SPECIFICATION

(11) **EP 1 008 784 B1**
(45) Date of publication and mention of the grant of the patent: **11.02.2004**
(21) Application number: 99309749.2
(22) Date of filing: 03.12.1999
(51) Int. Cl.: F16H 45/02

(54) **Torque converter bypass clutch damper having compliant pressure disc**
Dämpfer für die Überbrückungskupplung eines Momentwandlers mit einer nachgiebigen Druckscheibe
Amortisseur pour l'embrayage de pontage d'un convertisseur de couple avec un disque de pression élastique

(30) Priority: 07.12.1998 US 206419
(43) Date of publication of application: 14.06.2000
(73) Proprietor: Ford Global Technologies, LLC, Dearborn, MI 48126 (US)
(72) Inventor: MacDonald, Fraser John, Farmington Hills, Michigan 48331 (US)
(74) Representative: Messulam, Alec Moses

(56) References cited:
- WO-A-99/10663
- DE-A- 19 808 299
- DE-A- 19 836 775
- US-A- 5 056 631
- US-A- 5 501 309
- PATENT ABSTRACTS OF JAPAN vol. 011, no. 120 (M-580), 15 April 1987 (1987-04-15) & JP 61 262262 A (DAIKIN MFG CO LTD), 20 November 1986 (1986-11-20) & JP 61 262262 A (DAIKIN) 20 November 1986 (1986-11-20)

## Description

This invention relates to the field of automatic transmission torque converters, in which an impeller wheel hydrodynamically drives a turbine wheel. The invention pertains particularly to a bypass clutch.

The transaxle described in U.S. Patent No. 4,509,389, which is assigned to the assignee of this invention, includes a hydrokinetic torque converter having an impeller and a turbine. The housing for the impeller includes a lockup clutch assembly having a clutch plate that engages a friction surface on the impeller housing. The clutch plate carries friction material that establishes a frictional driving connection between the impeller and the turbine when the pressure differential across the clutch plate is sufficient to establish a clutch-engaging force.

The clutch plate is connected through a damper assembly to the hub of the turbine, thus establishing a mechanical torque transfer between an engine crankshaft and the turbine shaft, which bypasses the hydrokinetic torque flow path through the torque converter.

Converter lockup clutch constructions are well known in the art, an example of an early prior art torque converter assembly having a lockup clutch is disclosed in U. S. Patent No. 3,541,893.

More recent prior art teachings include means for controlling the application of the torque converter clutch by means of an electronic controller that establishes a modification of the clutch engaging force under certain operating conditions, for example, during shifts when it is desired to eliminate undesired torque fluctuations and engine speed changes during transient periods when torque flow interruption is desired. The electronic controller establishes a pressure force on the clutch plate that is adequate to meet the transient torque transmission requirements of the driveline. Examples of this are shown in U.S. Patent Numbers 4,560,043 and 4,301,900.

Conventionally in a torque converter bypass clutch, first contact between the piston and friction surface occurs at the radially outer surface of the piston when apply pressure is low. Thereafter, as apply pressure increases, this contact moves toward the radially inner surface portion of the piston face resulting in a lowering torque capacity versus apply pressure. Unfortunately, as apply pressure increases the magnitude of the contact force associated with that pressure is applied to a progressively smaller area of the piston.

It is preferable that the gain produced in a torque converter bypass clutch increase as the magnitude of applied pressure increases, whereas in a conventional bypass clutch gain decreases with increasing apply pressure.

According to the present invention, a bypass clutch for the torque converter of an automatic transmission for an automotive vehicle comprising: a bladed wheel supported for rotation about an axis on a hub; an impeller casing supported for rotation about said axis, having a friction surface facing the wheel; a piston supported on the hub for displacement thereon toward and away from the friction surface; and a disc supported on the piston for bending displacement due to contact with the friction surface, located between the piston and friction surface; characterised in that the disc extends radially inward and inclined axially toward the friction surface such that the disc first contacts the friction surface at a radially inner position as the piston moves toward the friction surface, and the disc contacts the friction surface over an area that extends radially outward from said position of first contact as the piston moves further toward the friction surface.

In a bypass clutch assembly embodying the invention, a clutch plate having a friction surface is located on an impeller casing adjacent a clutch piston. The piston is supported slidably on a hub, which is fixed to the turbine wheel. The clutch plate is welded to the inner surface of the impeller casing.

As load applied to the piston by hydraulic pressure increases, a compliant disc deflects such that the center of its area of contact with the friction surface on the impeller casing moves radially outward with respect to its location when the hydraulic pressure force is at a lower magnitude. The piston surface in the vicinity of the radially outer area of the piston supports the disc, applies clutch engagement force to the disc and pressure surface, and influences the position of center of the contact area while hydraulic pressure is high.

The bypass clutch provides positive gain, i.e., as the pressure force on the clutch increases, the clutch torque capacity increases. Because the area of contact increases at higher torque magnitudes, the resulting frictional contact pressure is lower than in conventional clutches.

US 5,501,309 and JP 61262262, which comprises the features mentioned in the preamble of claim 1, describe bypass clutches where a piston or an- attached ring deform classically when engaging or disengaging a surface in the impeller casing.

The invention will now be described, by way of example, with reference to the accompanying drawings, in which:
Figure 1 is a cross section of a torque converter, taken at a plane located in the axial and diametrical axes, showing a bypass clutch according to the invention;
Figure 2 is a cross section in the region of the bypass clutch piston and damper spring retainer shown in Figure 1;
Figure 3 is a cross section similar to that of Figure 2 but at a more advanced state of engagement of the bypass clutch; and
Figure 4 of a cross section similar to that of Figure 2.

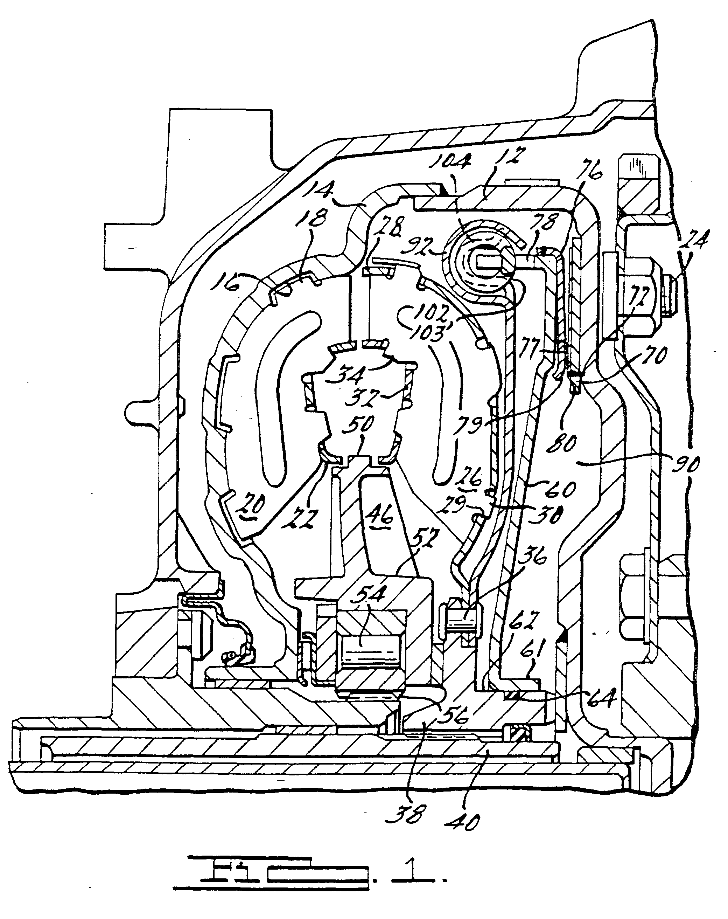

Referring first to Figure 1, a torque converter includes an impeller cover 12 welded to an impeller shell 14 having recesses 16, which receive tabs 18 located on the outer surface of impeller blades 20. The impeller blades are retained between shell 14 and an inner impeller shroud 22.

Impeller cover 12 supports a circular pattern of threaded studs 24 to which a flywheel, rotatably supported on the engine crankshaft, is bolted, thereby driveably connecting the cover to an engine.

Turbine blades 26 are spaced mutually about the axis of rotation and are located with respect to the impeller blades so that a toroidal fluid flow path within the torque converter exits the impeller and enters the turbine at the radially outer area and leaves the turbine at the radially inner area. The outer periphery of the turbine blades is fixed mechanically or by welding or brazing to a turbine shell 28, which has openings 29 that receive tabs 30 formed on the turbine blades. The inner periphery of the turbine blades is connected to an inner turbine shroud 32 by locating tabs 34 within slots formed in shroud 32 and by bending the tabs over the inner surface of the shroud, thereby fixing the position of blades 26 between shell 28 and shroud 32. Turbine shell 28 and retainer 97 are secured by rivets 36 to a turbine hub 38 having an internally splined surface 40 adapted to engage an externally splined surface on a transmission input shaft 42.

Located between the flow exit section of the turbine and the flow entrance section of the impeller is a stator assembly comprising stator blades 46, spaced mutually around the axis of rotation, a hub 48 supporting blades 46, an inner shroud 50 connecting the radially inner tips of the stator blades, and an outer shroud 52 connecting the radially outer ends of the stator blades. An overrunning brake 54, fixed by splines 56 to a stationary sleeve shaft 57, provides one-way braking between the stator blades 46 and the sleeve shaft.

A bypass clutch includes a piston 60 formed with a flange 61 that is slideably mounted on an axially directed surface 62 formed on turbine hub 38 and sealed against the passage of hydraulic fluid by an O-ring seal 64, located in a recess formed in surface 62.

A clutch plate 70 is fixed to the inner surface of impeller cover 12 by a spot weld 72, which provides a seal against the passage of hydraulic fluid between the axially outer surface of plate 70 and the adjacent inner surface of the cover 12. Clutch plate 70 and piston 60 are driveably connected when the bypass clutch is engaged due to mutual frictional engagement. Cover 12 is driveably connected to an engine crankshaft.

Clutch piston 60 includes four axial legs 78 spaced mutually angularly about the axis of rotation and directed toward the turbine wheel 26. The piston has a crowned surface 75 located at its radially outer portion and extending radially from the tangency with the fillet radius 76. The piston includes a surface 77 extending radially inward from the crown surface 75 and inclined axially away from plate 70 and disc 79. Plate 70 carries friction material 80, commonly referred to as "paper face" material, bonded to the axially inner radial surface of plate 70 by a bonding technique described by Frosbie, Milek and Smith in SAE Design Practices, Vol. 5 (1962).

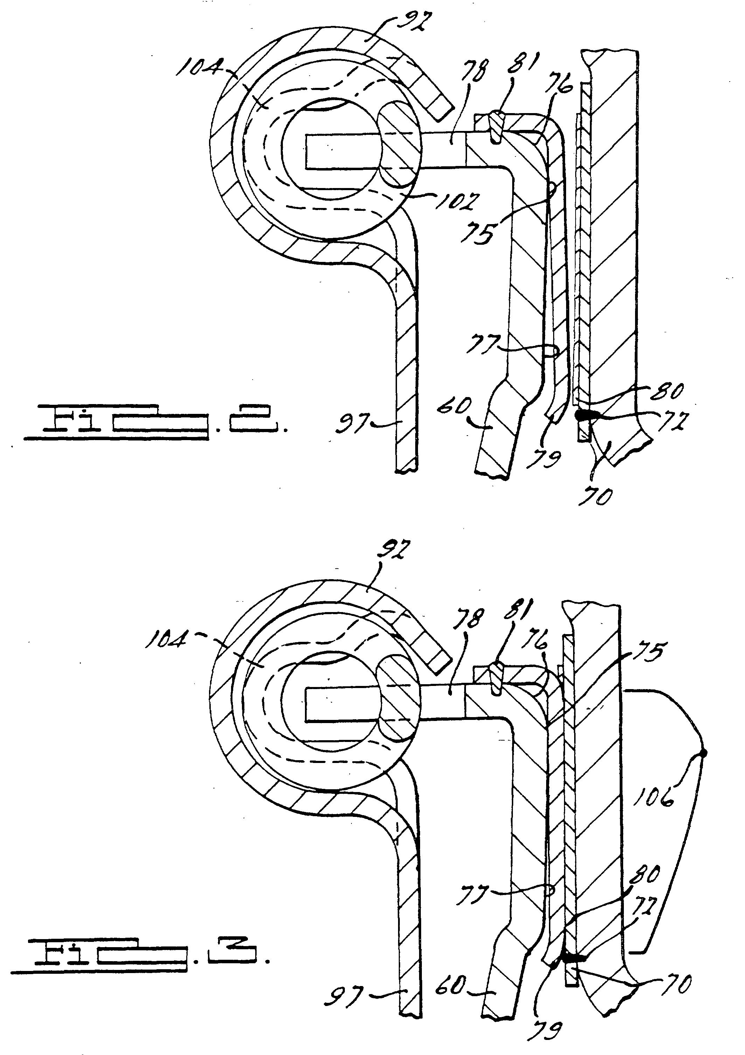

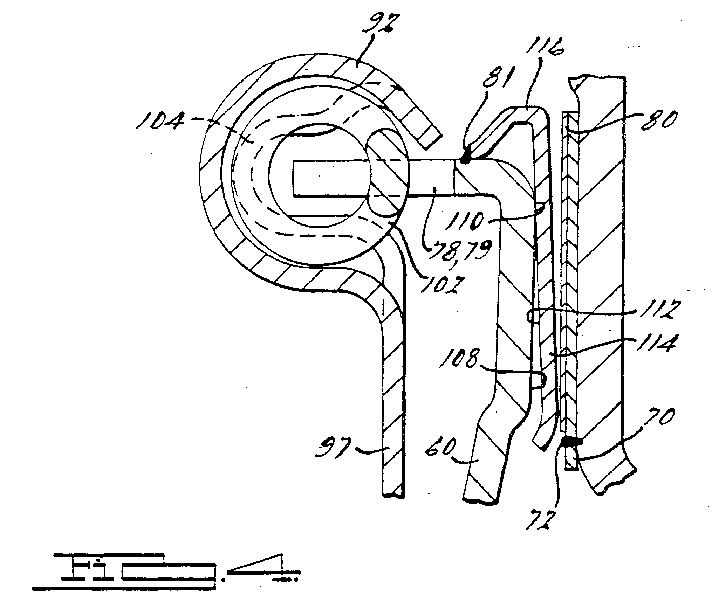

Referring to Figures 2 and 3, a pressure disc 79 is welded at 81 to the radially outer surface of piston 60, and the disc is formed such that the disc contacts surface 75 near a radially outer region and is inclined axially outward and radially inward away from surface 75 toward the friction material 80 on plate 70.

Each of the legs 78 of piston 60 is located for contact with a damper spring, as described below. The turbine shroud 28 and a torque converter damper spring retainer 97 are joined to a radially extending flange of turbine hub 38 at a riveted connection 36. At the radially outer end of retainer 97, several arcuate spring retainer flanges 92, spaced angularly about the axis at intervals corresponding to the location and arcuate lengths of the damper springs 102, 103, are formed. Flanges define a substantially circular tubular cavity, in which are located four angularly spaced, helically-coiled damper springs 102. Preferably, the two longer damper springs 102 are formed with an actuate shape; the two shorter springs 103 are formed straight and then bent to the contour of the arcuate flanges in which they are located. At four angularly spaced locations about the central axis of the torque converter, flange 92 of the damper support 97 is formed integrally with local stop flanges 104, adjacent pairs of stop flanges which define the extremities of annular pockets of the damper where each spring 102, 103 is located. Each stop flange provides a surface that stops an end of a spring from moving in response to displacement of the piston legs 78, which cause each spring to compress. Details of the damper assembly are described in U.S.S.N. 08/891,911, which is assigned to the assignor of this invention.

Piston 60 moves axially toward clutch plate 70 due to differential hydraulic pressure across the piston and away from the clutch plate as pressure within control chamber 90 rises in relation to pressure on the axially opposite side of the piston. Piston 60 also rotates about the axis when it is driveably connected to plate 70 because impeller cover 12 is connected to the engine crankshaft. This rotary movement of the piston forces two legs 78 into contact with springs 102 causing them to compress, store energy and dissipate energy due to contact of the spring on the inner surfaces of flanges 92.

Each of the axially directed legs 78 of the piston 60 is located within a space located between angularly opposite ends of each of the damper springs. Engine torque is transmitted through piston 60 to the damper assembly by bearing contact between axial legs 78 and the adjacent ends of the damper springs.

Chamber 90, bounded by piston 60, cover 12, and clutch plate 70, is a control pressure chamber, which communicates with a control pressure source, through a passage 91 in a manner described in U.S. Patent 4,633,738, which is assigned to the assignor of this invention. By controlling pressure in chamber 90, a pressure differential across piston 60 can be controlled. The pressure in the torus flow cavity on the left-hand side of piston 60 forces the piston to slide on surface 62 rightward and causes the mutually facing surfaces on clutch plate 70 and disc 79 to become frictionally engaged. By appropriately modulating the pressure in chamber 90, controlled slipping will occur between the cover and piston. Torque fluctuation developed in the driveline due to engine torque perturbations and other torque transmitting irregularities are modulated through operation of the damper assembly.

The piston is driveably connected through the damper assembly resiliently through the damper springs to retainer 97, via the attachment at rivets 36 to the turbine rotor, and through hub 38 to the transmission input shaft 42.

Figure 2 shows piston 60 and disc 79 located out of contact with clutch plate 70, the bypass clutch being disengaged and the piston located near its left-hand extremity of travel. When the clutch moves disc 79 rightward into contact with plate 70, light contact pressure between plate 79 and friction material 80 occurs first at the radially inner area of plate 70 and decreases gradually as the radial distance from the inner edge of the disc increases. Disc 79 flexes on surfaces 75,77 into compliant contact with the surface of material 80 on plate 70. The center of the contact pressure is at the radially inner area of plate 79.

Figure 3 shows piston 60 moved rightward from the position of Figure 2 to a position more fully engaged with clutch plate 70. Disc 79 contacts the friction material 80 substantially along its entire radial width. Bending of disc 79 through its thickness results due to support provided by contact between piston 60 and disc 79 on surfaces 75,77, pressure applied axially to disc 79 by plate 70, and clearance between the piston and disc at their radially inner regions. This bending produces a pressure distribution along the disc width similar to that shown in Figure 3. Preferably the center of the distributed pressure is located at 106, which is approximately 1/3 of the radial width of material 80 from its outer edge. In this way when bypass clutch apply pressure is low, the effective center of contact pressure between the piston-disc subassembly and plate 70 is near the radially inner surface. As apply pressure increases, the center of contact pressure moves radially outward.

In Figure 4, the piston surface 108 is inclined axially away from a crowned surface 110 such that an angle of 2-3 degrees exists between surface 108 and surface 112 of disc 114 before contact with the plate 70 occurs. The compliant pressure disc 114 is welded at 81 to the piston and includes a hooked portion 116 extending from the weld to a planar leg having an axially outer surface adapted to contact material 80. The adjacent surface of material 80 carried in clutch plate 70 is directed radially.

In the embodiments of Figure 2-4, the disc 79,114 are 1.0-1.5 mm thick and preferably are formed of high strength, low carbon alloy 950 structural sheet steel.

As increasing load is applied to the piston by hydraulic pressure, a compliant disc deflects such that the center of the area of contact with the friction surface on the impeller casing moves radially outward with respect to its location while the hydraulic pressure force is relatively low.

## Claims

1. A bypass clutch for the torque converter of an automatic transmission for an automotive vehicle, comprising:
a bladed wheel (26,28) supported for rotation about an axis on a hub (38);
an impeller casing (12) supported for rotation about said axis, having a friction surface (80) facing the wheel;
a piston (60) supported on the hub (38) for displacement thereon toward and away from the friction surface (80); and
a disc (79) supported on the piston (60) for bending displacement due to contact with the friction surface (80), located between the piston and friction surface;
**characterised in that** the disc (79) extends radially inward and inclined axially toward the friction surface (80) such that the disc (79) first contacts the friction surface at a radially inner position as the piston moves toward the friction surface, and the disc (79) contacts the friction surface (80) over an area that extends radially outward from said position of first contact as the piston moves further toward the friction surface.

2. A bypass clutch as claimed in claim 1, wherein:
the piston (60) includes a mounting surface on which the disc (79) is fixed to the piston, a crown (76) located near a radially outer portion of the piston and a support surface (75) located near a radially outer portion of the piston (60); and
the disc (79) includes a first surface contacting the crown (76), a second surface located between the piston (60) and the friction surface (80), the disc extends radially inward from the crown (76) and axially toward
the friction surface (80), and is spaced axially from the piston at a radially inward portion of the friction surface (80), the second surface adapted alternately to engage driveably and to disengage the friction surface (80) as the piston (60) moves on the hub.

3. A bypass clutch as claimed in claim 2, wherein:
the piston (60) further comprises a first flange (78), axially directed, having the mounting surface thereon, located at a radially outer surface; and
the disc (79) further comprises a second flange fixed to the mounting surface, a leg, and a folded hem located along the disc between the second flange and leg.

4. A bypass clutch as claimed in claim 2, wherein:
the piston (60) further comprises a first flange (78), axially directed, having the mounting surface thereon, located at a radially outer surface; and
the disc (79) further comprises a second flange fixed to the mounting surface, a leg, a hook portion (116) welded (81) to the piston at the mounting surface and extending from the weld to the leg.

5. A bypass clutch as claimed in claim 2, further comprising a weld (81) fixing the disc (79) to the piston (60) at the mounting surface.

## Patentansprüche

1. Überbrückungskupplung für einen Drehmomentwandler eines automatischen Getriebes für ein Kraftfahrzeug, folgendes aufweisend:
ein um eine Achse drehbar auf einer Nabe (38) gelagertes Schaufelrad (26, 28);
ein um besagte Achse drehbar gelagertes Pumpenradgehäuse (12) mit einer dem Rad zugekehrten Reibfläche (80);
einen auf der Nabe (38) verschiebbar gelagerten Kolben (60), der auf der Nabe auf die Reibfläche (80) zu und von dieser hinweg bewegbar ist; und
eine an besagtem Kolben (60) gelagerte Lamelle oder Scheibe (79), die durch Anlage an die Reibfläche (80) biegebeweglich nachgeben kann und zwischen dem Kolben und der Reibfläche angeordnet ist;
**dadurch gekennzeichnet, daß**
die Lamelle oder Scheibe (79) radial nach innen reicht und axial zur Reibfläche (80) hin geneigt ist, so daß die Lamelle die Reibfläche zuerst an einer radial inneren Stelle berührt, wenn sich der Kolben auf die Reibfläche zubewegt, und die Lamelle oder Scheibe (79) dann die Reibfläche (80) über einen Bereich berührt, der sich radial außerhalb der Stelle des ersten Kontaktes erstreckt, wenn sich der Kolben weiter in Richtung auf die Reibfläche bewegt.

2. Überbrückungskupplung nach Anspruch 1, worin:
der Kolben (60) eine Montagefläche beinhaltet, an welcher die Lamelle oder Scheibe (79) am Kolben befestigt ist, einen in der Nähe eines radial äußeren Abschnittes des Kolbens liegenden Kranz (76), und eine in der Nähe eines radial äußeren Abschnittes des Kolbens liegende Auflagefläche (75); und
die Lamelle oder Scheibe (79) eine an dem Kranz (76) anliegende erste Oberfläche beinhaltet, eine zwischen dem Kolben (60) und der Reibfläche (80) liegende zweite Oberfläche, wobei sich die Lamelle von dem Kranz (76) aus radial nach innen und axial in Richtung auf die Reibfläche (80) erstreckt und an einem radial inneren Abschnitt der Reibfläche (80) axial im Abstand von besagtem Kolben liegt, wobei die zweite Reibfläche ausgelegt ist, mit der Reibfläche (80) abwechselnd in antriebsschlüssigen Eingriff bzw. außer Eingriff mit derselben zu gelangen, wenn der Kolben (60) auf der Nabe verschoben wird.

3. Überbrückungskupplung nach Anspruch 2, worin:
der Kolben (60) außerdem einen axial ausgerichteten ersten Flansch (78) beinhaltet, der eine Montagefläche daran aufweist und an einer radial äußeren Fläche angeordnet ist; und
die Lamelle oder Scheibe (79) einen an der Montagefläche befestigten zweiten Flansch aufweist, einen Schenkel und einen umgebogenen Rand, der entlang der Lamelle zwischen dem zweiten Flansch und dem Schenkel angeordnet ist.

4. Überbrückungskupplung nach Anspruch 2, worin:
der Kolben (60) außerdem einen axial ausgerichteten ersten Flansch (78) beinhaltet, der eine Montagefläche daran aufweist und an einer radial äußeren Fläche angeordnet ist; und
die Lamelle oder Scheibe (79) außerdem einen an der Montagefläche befestigten zweiten Flansch aufweist, einen Schenkel und einen hakenförmigen Abschnitt (116), der am Kolben an der Montagefläche angeschweißt (81) ist und von der Schweißstelle zum Schenkel hin reicht.

5. Überbrückungskupplung nach Anspruch 2, außerdem eine Schweißung (81) aufweisend, mit der die Lamelle oder Scheibe (79) an der Montagefläche am Kolben (60) befestigt ist.

## Revendications

1. Embrayage de dérivation destiné au convertisseur de couple d'une transmission automatique d'un véhicule automobile, comprenant :
une roue à aubes (26, 28) supportée en vue d'une rotation autour d'un axe sur un moyeu (38),
un carter d'impulseur (12) supporté en vue d'une rotation autour dudit axe, comprenant une surface de frottement (80) orientée vers la roue,
un piston (60) supporté sur le moyeu (38) en vue d'un déplacement sur celui-ci vers et à l'écart de la surface de frottement (80), et
un disque ou lamelle (79) supporté(e) sur le piston (60) destiné à un déplacement par flexion en raison du contact avec la surface de frottement (80), situé entre le piston et la surface de frottement,
**caractérisé en ce que** le disque ou lamelle (79) s'étend radialement vers l'intérieur et est incliné axialement en direction de la surface de frottement (80) de telle sorte que le disque ou lamelle (79) vienne tout d'abord en contact avec la surface de frottement à une position radialement intérieure lorsque le piston se déplace vers la surface de frottement et que le disque ou lamelle (79) vienne en contact avec la surface de frottement (80) sur une surface qui s'étend radialement vers l'extérieur par rapport à ladite position du premier contact lorsque le piston se déplace davantage vers la surface de frottement.

2. Embrayage de dérivation selon la revendication 1, dans lequel :
le piston (60) comprend une surface de montage sur laquelle le disque ou lamelle (79) est fixé(e) au piston, une couronne (76) située près d'une partie radialement extérieure du piston et une surface de support (75) située près d'une partie radialement extérieure du piston (60), et
le disque ou lamelle (79) comprend une première surface en contact avec la couronne (76), une seconde surface située entre le piston (60) et la surface de frottement (80), le disque s'étend radialement vers l'intérieur depuis la couronne (76) et axialement vers la surface de frottement (80) et il est espacé axialement du piston au niveau d'une partie radialement vers l'intérieur de la surface de frottement (80), la seconde surface étant conçue pour, alternativement, se mettre en contact d'entraînement avec la surface de frottement (80) et se désolidariser de celle-ci lorsque le piston (60) se déplace sur le moyeu.

3. Embrayage de dérivation selon la revendication 2, dans lequel :
le piston (60) comprend en outre un premier bord relevé (78), dirigé axialement, comprenant la surface de montage sur celui-ci, situé au niveau d'une surface radialement extérieure, et
le disque ou lamelle (79) comprend en outre un second bord relevé fixé à la surface de montage, un bras et un bord rabattu plié situé le long du disque entre le second bord relevé et le bras.

4. Embrayage de dérivation selon la revendication 2, dans lequel :
le piston (60) comprend en outre un premier bord relevé (78), dirigé axialement, comprenant la surface de montage sur celui-ci, situé au niveau d'une surface radialement extérieure, et
le disque ou lamelle (79) comprend en outre un second bord relevé fixé à la surface de montage, un bras, une partie de crochet (116) soudée (81) au piston au niveau de la surface de montage et s'étendant de la soudure vers le bras.

5. Embrayage de dérivation selon la revendication 2, comprenant en outre une soudure (81) fixant le disque ou lamelle (79) au piston (60) au niveau de la surface de montage.
